(19) Europäisches Patentamt
European Patent Office
Office européen des brevets

(11) Numéro de publication : 0 589 768 A1

# (12) DEMANDE DE BREVET EUROPEEN

(21) Numéro de dépôt : 93402289.8

(22) Date de dépôt : 20.09.93

(51) Int. Cl.$^5$ : H04L 25/30

(30) Priorité : 25.09.92 FR 9211466

(43) Date de publication de la demande : 30.03.94 Bulletin 94/13

(84) Etats contractants désignés : AT BE CH DE DK ES FR GB IT LI NL SE

(71) Demandeur : ALCATEL N.V.
Strawinskylaan 341, (World Trade Center)
NL-1077 XX Amsterdam (NL)
(84) BE CH DE DK ES GB IT LI NL SE AT

(71) Demandeur : ALCATEL RADIOTELEPHONE
10, rue de la Baume
F-75008 Paris (FR)
(84) FR

(72) Inventeur : Mourot, Christophe
36, rue Paul Bert
F-92600 Asnieres (FR)
Inventeur : Wautier, Armelle
c/o Supelec, Plateau du Moulon
F-91190 Gif Sur Yvette (FR)
Inventeur : Dany, Jean-Claude
c/o Supelec, Plateau du Moulon
F-91190 Gif Sur Yvette (FR)

(74) Mandataire : Schaub, Bernard et al
c/o SOSPI 14-16 rue de la Baume
F-75008 Paris (FR)

## (54) Dispositif de filtrage pour égaliseur à estimation de séquence.

(57) L'invention se présente sous la forme d'un dispositif de filtrage pour égaliseur (5) à estimation de séquence d'après une réponse impulsionnelle tronquée, comprenant un filtre (4) pour traiter une séquence de symboles reçus (SR) par un canal de transmission (1) au moyen de coefficients de filtrage (FC) et pour délivrer la séquence ainsi traitée à cet égaliseur (5), un estimateur de canal (2) recevant également cette séquence de symboles reçus (SR) pour produire la réponse impulsionnelle du canal de transmission (1),et se caractérise en ce qu'il comprend un circuit de calcul (3) pour calculer les coefficients de filtrage (FC) à partir de la réponse impulsionnelle (RIC) du canal de transmission (1) de sorte que la réponse impulsionnelle globale (RIG) du canal de transmission (1) et du filtre de canal (4) soit à phase minimale, ce circuit de calcul (3) délivrant également un signal de correction (C) représentant le comportement du canal de transmission (1) suivi du filtre de canal (4), et en ce qu'il comprend un circuit de commande (6) pour produire cette réponse impulsionnelle globale (RIG) à destination de l'égaliseur (5) à partir du signal de correction (C).

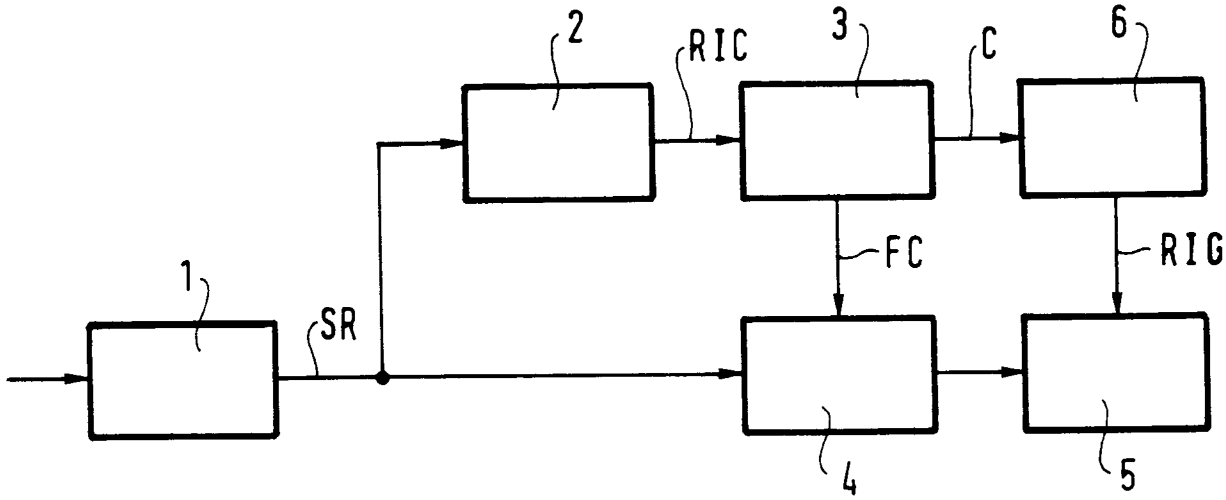


EP 0 589 768 A1

La présente invention concerne un dispositif de filtrage pour égaliseur à estimation de séquence.

Dans un système de transmission, notamment par ondes radio, un émetteur émet une séquence de symboles dans un canal de transmission à destination d'un récepteur. La séquence émise subit des altérations dans le canal de transmission si bien que la séquence de symboles reçus par le récepteur ne lui est pas identique. La principale de ces altérations est l'interférence entre symboles qui est dûe au fait qu'un symbole émis peut emprunter plusieurs trajets dans le canal de transmission. En effet si deux trajets au moins présentent un écart supérieur à la distance séparant deux symboles émis successivement, un symbole empruntant un de ces trajets va venir interférer avec un symbole suivant empruntant un autre trajet plus court.

Pour corriger l'interférence entre symboles dans le récepteur, on utilise un égaliseur qui, pour fonctionner correctement, doit connaître la réponse impulsionnelle du canal de transmission. A cette fin, des symboles particuliers émis dans une séquence d'apprentissage sont des symboles connus, par opposition aux symboles de données qui font l'objet de la transmission et qui, par hypothèse, ne sont pas connus du récepteur. Il est ainsi courant de prévoir qu'un paquet de symboles destiné à un récepteur particulier comprenne successivement des symboles de données, une séquence d'apprentissage et de nouveau des symboles de données, la séquence d'apprentissage étant ainsi disposée au centre du paquet.

La séquence d'apprentissage est choisie en fonction des caractéristiques du canal de transmission et plus particulièrement en fonction de sa longueur.

En effet, compte-tenu du fait que les symboles sont émis régulièrement et présentent donc une périodicité que l'on nomme durée-symbole, la longueur du canal se définit comme le nombre de durée-symboles qui est équivalent à la différence du trajet le plus long et du trajet le plus court de ce canal.

Pour établir la réponse impulsionnelle du canal, on utilise, dans le récepteur, un estimateur de canal qui génère cette séquence d'apprentissage et la corrèle avec la séquence correspondante de symboles reçus. Le résultat de la corrélation est un jeu de coefficients $h_i$ où i varie de O à L, L étant la longueur du canal. Le trajet le plus direct du canal est représenté par $h_O$, tandis que les autres coefficients représentent les trajets plus longs qui produisent des interférences avec le premier.

Dans le cas le plus général, ces coefficients sont de nature complexe car les symboles reçus peuvent se décomposer sur une base orthogonale en deux composantes, l'une dite "en phase" et l'autre "en quadrature". Par la suite, on conviendra de nommer ce jeu de coefficients réponse impulsionnelle.

On connaît essentiellement deux types d'égaliseur, le premier fonctionnant sur le principe d'une détection symbole par symbole et le second fonctionnant selon le principe du maximum de vraisemblance en estimant une séquence de symboles.

Le second type présente généralement des performances bien meilleure que le premier mais il est également affecté d'une complexité plus grande en terme de nombres d'opération à effectuer. On rappellera brièvement le fonctionnement des égaliseurs du second type également connus sous le nom d'égaliseurs de Viterbi afin d'en préciser les limites, ceci bien qu'il y ait une litérature abondante à ce sujet et notamment l'article de G. David FORNEY Jr. "Maximum likelihood sequence estimation of digital sequences in the presence of intersymbol interference", IEEE Transactions on Information Theory, Vol. IT-18, n°3, mai 1972, pages 363 à 378.

Si l'on note q le nombre d'états que peut prendre un symbole et L la longueur du canal de transmission, on définit un treillis comprenant $n_e$ états qui représentent toutes les valeurs possibles d'une séquence de L symboles :

$$n_e = q^L$$

L'égaliseur compare la séquence de symboles reçus dans le treillis aux différentes séquences possibles pondérées par les coefficients de la réponse impulsionnelle du canal de transmission pour calculer les métriques de branche $\lambda_j$. Ainsi, si l'on note :

- $\sigma_t$, un état du treillis au temps t,
- $\sigma_{t-1}$, un état du treillis au temps t-1 conduisant à l'état $\sigma_t$ (il y a q possibilités pour $\sigma_{t-1}$),
- $x_t$, l'étiquette, c'est-à-dire le symbole qui identifie la transition entre l'état $\sigma_t$ et l'état $\sigma_{t-1}$,
- $y_t$ le symbole reçu au temps t,
- $S_{t-i}$, i=1 à L, le symbole de poids i de l'état $\sigma_{t-1}$,
- $h_i$, i = O,..., L, les coefficients de la réponse impulsionnelle du canal de transmission,

alors les métriques de branches valent :

$$\lambda_j = \left| y_t - h_0 x_t - \sum_{i=1}^{L} h_i s_{t-i} \right|^2 \quad j = 1,\ldots,q^L$$

On définit ainsi un chemin ou survivant comme la suite des étiquettes $x_1$, $x_2$, ... qui produisent les transitions de $S_o$ à $S_1$, de $S_1$ à $S_2$,..., et la métrique de chemin correspondante qui est la somme des métriques de branche obtenues en suivant le chemin. En effet, pour passer de l'état $\sigma_{t-1}$ à $\sigma_t$, seule l'étiquette conduisant à la métrique de chemin la plus faible est retenue pour chaque état du treillis. Ainsi, lorsque toute la séquence de symboles reçus a été traitée, l'égaliseur délivre en sortie le survivant dont la métrique de chemin est la plus faible.

Un égaliseur de ce type présente des performances universellement reconnues en terme de taux d'erreur. Cependant, le nombre d'état du treillis $n_e$ croît exponentiellement avec la longueur du canal L et le nombre d'opérations à effectuer pour chaque état croît linéairement avec cette même grandeur L. Le nombre total d'opérations peut donc devenir considérable pour des canaux de transmission présentant de multiples trajets.

Il a donc été proposé de travailler à partir d'une réponse impulsionnelle tronquée, c'est-à-dire avec un treillis présentant un nombre d'état réduit :

$ne = q^M$ où M est inférieur à L,

notamment par A. DUEL-HALLEN et C.HEEGARD dans l'article "Delayed decision feedback sequence estimation", IEEE Transactions on Communications, vol.37, n°5, mai 1989, pages 428 à 436.

Dans ce cas la métrique de branche $\lambda_j$ devient :

$$\lambda_j = \left| y_t - h_0 x_t - \sum_{i=1}^{M} h_i s_{t-i} - \sum_{i=M+1}^{L} h_i e_{t-i} \right|^2 \qquad j = 1, \ldots, q^M$$

Cette expression est similaire à la précédente si ce n'est que, la somme pondérée par les coefficients $h_i$ (i différent de 0) est maintenant séparée en deux parties, la première pour i inférieur ou égal à M et la seconde pour i compris entre M+1 et L. La première partie concerne toujours l'état du treillis $S_{t-i}$ à l'origine de la transition mais il n'en va pas de même pour la deuxième partie puisque le treillis a été réduit. Il faut donc ici remplacer la variable d'état $S_{t-i}$ par le symbole correspondant précédemment estimé $e_{t-i}$ situé sur le survivant aboutissant à l'état $\sigma_{t-1}$.

Il apparaît qu'une erreur faite sur l'un quelconque des symboles estimés $e_{t-i}$ va s'introduire dans le calcul de la métrique de branche $\lambda_j$ et va se propager dans les métriques suivantes. Le poids de cette erreur dans la métrique sera d'autant plus fort que le module du coefficient de la réponse impulsionnelle correspondant hi sera important.

La présente invention a ainsi pour but de réduire le poids des erreurs dûes à l'introduction des symboles précédemment estimés dans le calcul des métriques de branches par un égaliseur à estimation de séquence travaillant à partir d'une réponse impulsionnelle tronquée.

Ce but est obtenu par un dispositif de filtrage pour égaliseur à estimation de séquence d'après une réponse impulsionnelle tronquée, comprenant un filtre pour traiter une séquence de symboles reçus par un canal de transmission au moyen de coefficients de filtrage et pour délivrer la séquence ainsi traitée à cet égaliseur, un estimateur de canal recevant également la séquence de symboles reçus pour produire la réponse impulsionnelle du canal de transmission, et se caractérise en ce qu'il comprend un circuit de calcul pour calculer les coefficients de filtrage à partir de la réponse impulsionnelle du canal de transmission de sorte que la réponse impulsionnelle globale du canal de trasmission et du filtre de canal soit à phase minimale, ce circuit de calcul délivrant également un signal de correction représentant le comportement du canal de transmission suivi du filtre de canal, et en ce qu'il comprend un circuit de commande pour produire cette réponse impulsionnelle globale à destination de l'égaliseur à partir du signal de correction.

Ainsi le filtre qui permet d'obtenir une réponse impulsionnelle globale à phase minimale concentre l'énergie dans les premières coefficients $h_i$ c'est-à-dire pour i proche de 1. La valeur moyenne des modules des $h_i$ pour i compris entre M+1 et L est réduite au bénéfice de celle des modules des $h_i$ pour i inférieur ou égal à M, ce qui a bien pour effet de réduire le poids des symboles estimés $e_{t-i}$ dans le calcul des métriques de branche.

L'invention apparaîtra maintenant de manière plus précise dans la description d'un mode de réalisation donné à titre d'exemple en se référant à la figure unique qui représente un schéma du dispositif de filtrage selon l'invention disposé entre le canal de transmission et l'égaliseur.

Comme dans tout système de transmission, le canal de transmission 1 délivre une séquence de symboles qui sont les symboles reçus SR.

Les symboles reçus, lorsqu'ils proviennent de la séquence d'apprentissage, sont traités par l'estimateur de canal 2 qui produit la réponse impulsionnelle du canal de transmission RIC dans sa représentation temporelle H(t) sous la forme d'un jeu de coefficients $h_i$ ou i varie de O à L, L étant la longueur du canal.

Cette réponse impulsionnelle RIC est traitée par un circuit de calcul 3 qui fournit des coefficients de filtrage

FC à un filtre de canal 4 interposé entre le canal de transmission 1 et l'égaliseur 5.

De manière générale, c'est un filtre adapté qui est choisi comme filtre de canal. Or ce type de filtre ne présente pas une réponse à phase minimale. De plus il "colore" le bruit, c'est-à-dire qu'il corrèle les échantillons de bruit successifs. Un tel phénomène n'est pas compatible avec un traitement par l'algorithme de Viterbi, ce qui impose l'emploi d'un filtre supplémentaire pour décorréler les échantillons de bruit, filtre dit filtre de blanchiment.

Dans le cas présent, ce filtre de canal 4 n'est pas un filtre adapté mais il permet de rendre la réponse impulsionnelle globale du canal de transmission 1 et de ce filtre de canal 4 à phase minimale, c'est-à-dire telle que la tansformée en z de la fonction de transfert de ces deux éléments comprennent tous ses zéros à l'intérieur de cercle unité dans le plan complexe.

On notera H(z), C(z) et G(z) les transformées en z des réponses impulsionnelles respectivement du canal de transmission 1, du filtre de canal 4 et de l'ensemble de ces deux éléments.

Il est toujours possible de décomposer H(z) comme le produit d'un polynôme à zéros dans le cercle unité et d'un polynôme à zéros sur ou en dehors de cercle unité :

$$H(z) = H_0 \prod_{i=1}^{p} (\alpha_i - z) \prod_{j=1}^{q} (\beta_j - z)$$

avec $|\alpha_i| < 1, |\beta_j| \geqq 1$ et $H_0 = _{cons\ tan\ te}$

Par ailleurs, G(z) = H(z).C(z).

Pour que G(z) soit à phase minimale il suffit de choisir :

$$C(z) = C_0 \prod_{j=1}^{q} \frac{1}{(\beta_j - z)}$$

avec $C_0$ = cons tan te

$$G(z) = H_0 C_0 \prod_{i=1}^{p} (\alpha_i - z)$$

et $|\alpha_i| < 1$

Il apparaît ainsi que le filtre de canal 4 est entrièrement défini par les zéros $\beta_j$ de module supérieur ou égal à 1 de la fonction de transfert du canal de transmission. La recherche des zéros de module supérieur ou égal à 1 est un sujet bien connu de l'homme de métier qui, de plus se situe en dehors de l'invention.

Il ne sera donc pas développé ici et l'on pourra se référer, par exemple, à l'article de A.P CLARK et S.F. HAU "Adaptative adjustement of receiver for distorted digital signals", IEE Proceedings, Part F, août 1984, vol 131, pages 526 à 536.

Le dispositif de filtrage comprend également un circuit de commande 6 qui fournit la réponse impulsionnelle globale RIG du canal de transmission 1 et du filtre de canal 4 à l'égaliseur 5. Si l'on adopte maintenant une représentation temporelle ou H(t), C(t) et G(t) représente les réponses impulsionnelles respectivement du canal de transmission 1, du filtre de canal 4 et de l'ensemble de ces deux éléments, G(t) est le produit de convolution de H(t) et de C(t). Le circuit de commande 6 reçoit du circuit de calcul 3 un signal de correction C qui représente le comportement du canal de transmission 1 suivie du filtre de canal 4. A titre d'exemple, ce signal de correction est composé de H(t) et de C(t), H(t) pouvant d'ailleurs être fourni directement par l'estimateur de canal 2. Le circuit de commande 6 fournit ainsi à l'égaliseur 6 un jeu de coefficients $g_i$ représentant la réponse impulsionnelle globale G(t) qui est homologue du jeu de coefficients hi représentant la réponse impulsionnelle du canal de transmission H(t).

## Revendications

**1)** Dispositif de filtrage pour égaliseur (5) à estimation de séquence d'après une réponse impulsionnelle

tronquée, comprenant un filtre (4) pour traiter une séquence de symboles reçus (SR) par un canal de transmission (1) au moyen de coefficients de filtrage (FC) et pour délivrer la séquence ainsi traitée audit égaliseur (5), un estimateur de canal (2) recevant également ladite séquence de symboles reçus (SR) pour produire la réponse impulsionnelle (RIC) dudit canal de transmission (1), caractérisé en ce qu'il comprend un circuit de calcul (3) pour calculer lesdits coefficients de filtrage (FC) à partir de la réponse impulsionnelle (RIC) dudit canal de transmission (1) de sorte que la réponse impulsionnelle globale (RIG) dudit canal de trasmission (1) et dudit filtre de canal (4) soit à phase minimale, ce circuit de calcul (3) délivrant également un signal de correction (C) représentant le comportement dudit canal de transmission (1) suivi dudit filtre de canal (4), et en ce qu'il comprend un circuit de commande (6) pour produire ladite réponse impulsionnelle globale (RIG) à destination dudit égaliseur (5) à partir dudit signal de correction (C).

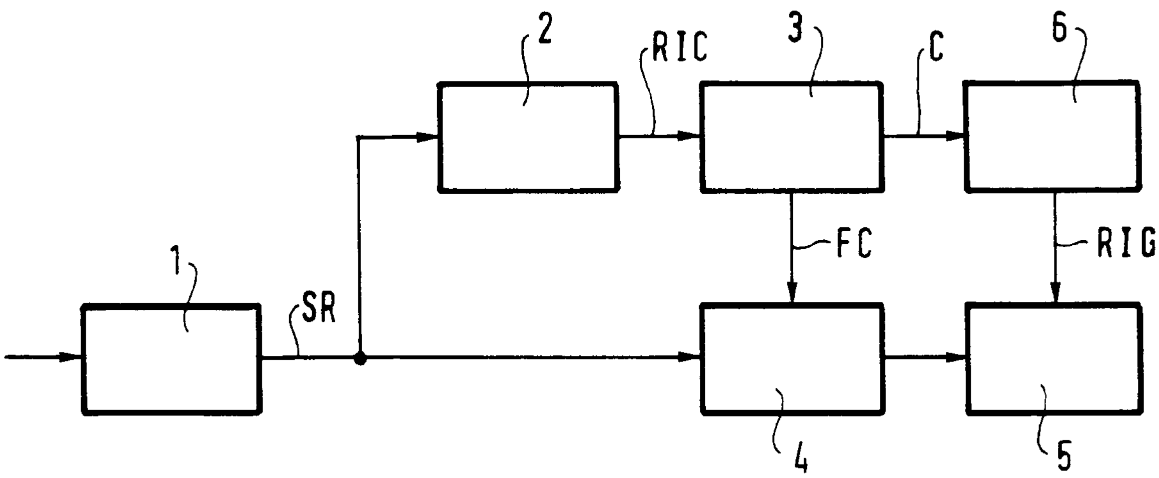
1
SR
2
RIC
3
C
6
FC
RIG
4
5

Office européen des brevets

# RAPPORT DE RECHERCHE EUROPEENNE

Numero de la demande
EP 93 40 2289

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| X | IEE Colloquium on Adaptive Filters, 22 Mars 1989; IEE, London, UK, 1989; pages 6/1-3, Bateman et Hale: "Real time implementation of adaptive filter <algorithms for high - speed data transmission"<br>* abrégé *<br>--- | 1 | H04L25/30 |
| A | WO-A-92 11708 (MOTOROLA)<br>* abrégé; figure 4 *<br>----- | 1 | |
| | | | **DOMAINES TECHNIQUES RECHERCHES (Int.Cl.5)** |
| | | | H04L<br>H03M |

Le présent rapport a été établi pour toutes les revendications

| Lieu de la recherche | Date d'achèvement de la recherche | Examinateur |
|---|---|---|
| LA HAYE | 16 Décembre 1993 | Scriven, P |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)